# EUROPÄISCHE PATENTSCHRIFT

(11) **EP 0 907 841 B1**
(45) Veröffentlichungstag und Bekanntmachung des Hinweises auf die Patenterteilung: **07.04.2004**
(21) Anmeldenummer: 97923856.5
(22) Anmeldetag: 07.05.1997
(51) Int. Cl.: F16D 65/095

(54) **TEILBELAG-SCHEIBENBREMSE**
SPOT TYPE DISC BRAKE
FREIN A DISQUE A GARNITURE PARTIELLE

(30) Priorität: 01.07.1996 DE 19626303
(43) Veröffentlichungstag der Anmeldung: 14.04.1999
(73) Patentinhaber: Continental Teves AG & Co. oHG, 60488 Frankfurt (DE)
(72) Erfinder: WEILER, Rolf, D-65817 Eppstein (DE); FUCHS, Elmar, D-64293 Darmstadt (DE); LANGNER, Bernd, D-61184 Karben (DE)
(74) Vertreter: Portwich, Peter
(86) Internationale Anmeldenummer: PCT/EP1997/002359
(87) Internationale Veröffentlichungsnummer: WO 1998/000651

(56) Entgegenhaltungen:
- DE-A- 2 937 149
- DE-A- 3 231 176
- DE-A- 3 336 302
- DE-A- 4 024 484
- DE-A- 4 101 599
- DE-C- 2 845 959
- US-A- 4 214 649
- US-A- 4 296 841
- US-A- 4 467 897
- US-A- 4 881 623
- US-A- 4 901 825

## Beschreibung

Die Erfindung betrifft eine Teilbelag-Scheibenbremse für Kraftfahrzeuge, insbesondere integrierte Scheibenbremse sowie einen Bremsbelag entsprechend den Oberbegriffen der Patentansprüche 1 und 4.

Aus der DE 33 36 302 A1 ist bereits eine Haltefeder für ein Gehäuse einer Teilbelag-Scheibenbremse bekannt, die mit einem sich etwa tangential zur Bremsscheibe und parallel zur Rückenplatte eines Bremsbelages erstreckenden Schenkel versehen ist, dessen freies Endteil an einem von zwei Tragteilen des Bremsträgers federnd anliegt, wobei sie mindestens einen Arm aufweist, der mit der Rückenplatte des Bremsbelages fest verbunden ist. Die Haltefeder ist aus einem einzigen Drahtabschnitt gebildet und weist eine T-Konfiguration auf, wobei das der Bremsscheibenachse zugekehrte untere Ende des sich radial erstreckenden Armes der Feder mit einem sich am Tragteil abstützenden Schenkel versehen ist, der sich im übrigen parallel zur Bremsscheibe erstreckt. Andererseits besitzt die Halterfeder an ihren freien Enden diametral entgegengesetzt verlaufende Federabschnitte, die axial außen am Bremssattel abgestützt sind. Hierbei ist der am Tragteil anliegende Schenkel in seiner Länge so bemessen, daß er über das freie Ende des am Bremssattel sich abstützenden Federabschnittes hinausragt.

Aus der DE 40 24 484 A1 ist ferner ein Schwimmsattel für eine Teilbelag-Scheibenbremse, insbesondere eine Faustsattelbremse, bekannt, der an einem Bremsträger axial verschiebbar gelagert und mittels einer Gehäusehaltefeder gegen den Bremsträger verspannt ist, wobei die Gehäusehaltefeder am axial äußeren Schenkel des Schwimmsattels angehängt ist und im wesentlichen parallel zur Bremsscheibe verlaufende Federarme aufweist, die in radialer Richtung gegen den Bremsträger drücken und relativ zu diesem in axialer Richtung verschiebbar sind. Ferner besitzt der axial äußere Bremssattelschenkel an seinem radial nach innen offenen Ende mindestens einen Vorsprung, an dem die Gehäusehaltefeder durch Einrasten gegen axiale Verschiebungen relativ zum Schwimmsattel verriegelt wird. Die Gehäusehaltefeder weist außerdem zwei Befestigungsarme auf, die gegenüber dem Mittelteil abgewinkelt und mit den umgebogenen Enden in Öffnungen des axial äußeren Schenkels des Schwimmsattels festgehakt sind.

Die bekannten Haltefedern erfordern zu ihrer Montage eine vergleichsweise aufwendige Bearbeitung des jeweils zugehörigen Bremssattels und sind darüber hinaus nicht geeignet den Sattel vormontiert mit den Bremsklötzen transportieren zu können.

Die Erfindung geht daher aus von einer Haltefeder der sich aus dem Oberbegriff des Hauptanspruches ergebenden Gattung.

Der Erfindung liegt die Aufgabe zugrunde, eine Haltefeder der zuvor genannten Gattung zu schaffen, zu deren Befestigung am Bremsgehäuse keine Bearbeitung erforderlich ist und die in einem vormontierten Zustand am Sattel angebracht werden kann und dabei auch den äußeren Bremsbelag in der vorgesehenen Position fixiert, so daß ein Transport des Sattels ohne lose Teile möglich ist.

Diese Aufgabe wird erfindungsgemäß durch die kennzeichnenden Merkmale der Ansprüche 1 und 4 gelöst.

Mit der erfindungsgemäßen Lösung wird auf überraschend einfache Weise erreicht, daß zur Aufnahme der Feder am Gehäuse keine Bearbeitung notwendig ist. Die benötigten Abstützungen können bereits fertig gegossen werden. Ein weiterer Vorteil der Erfindung ist, daß die Haltefeder in einem vormontierten Zustand am Sattel angebracht werden kann und dabei auch den äußeren Belag der vorgesehenen Position fixiert, so daß ein Transport des Sattels ohne lose Teile möglich ist. Bei der Endmontage wird die Gehäusehaltefeder um Ihre Drehachse geschwenkt und verriegelt. Die erfindungsgemäße Haltefeder eignet sich besonders für integrierte Scheibenbremsen, bei denen der Bremsträger der Scheibenbremse in den Achsschenkel des Kraftfahrzeuges integriert ist.

Eine vorteilhafte Ausführungsform der Erfindung sieht vor, daß der Federarm insbesondere mit einem Endbereich an zumindest einem der vom Bremsträger gebildeten Belagträgerarmen anliegt.

Gemäß einer weiteren vorteilhaften Ausführungsform der Erfindung ist vorgesehen, daß zur Halterung der Feder am Bremsbelag ein u.a. aus Blech gefertigtes Halteelement vorgesehen ist.

Gemäß einer anderen vorteilhaften Ausführungsform bildet das Halteelement einen U-förmigen Befestigungskörper, der einen Befestigungsabschnitt zur Befestigung des Halteelements am Bremsbelag aufweist.

Weitere Vorteile und Merkmale der Erfindung ergeben sich aus den Unteransprüchen und der nachfolgenden Beschreibung der Erfindung anhand der Zeichnung.

Es zeigen:
- Figur 1:: eine Vorderansicht einer Teilbelag-Scheibenbremse,
- Figur 2:: eine Teilansicht der in Fig. 1 dargestellten Scheibenbremse in Draufsicht,
- Figur 3:: einen Schnitt durch den äußeren Schenkel der in den Figuren 1 und 2 dargestellten Scheibenbremse,
- Figur 4:: eine Prinzipdarstellung der Gehäusehaltefeder im vormontierten Zustand und im endmontierten Zustand.

Die in der Zeichnung dargestellte Teilbelagscheibenbremse ist vom integrierten Typ, bei dem der Bremsträger 2 in den Achsschenkel 4 eines Fahrzeuges integriert ist. Der Bremsträger 2 weist einen sich im wesentlichen parallel zu einer (nicht dargestellten) Bremsscheibe erstreckenden Abschnitt 6 auf sowie 2 Bremsträgerarme 8, 10, die sich parallel zur Achse der Bremsscheibe über deren Rand hinweg erstrecken. Am Bremsträger 2 ist ein Bremsgehäuse 12 axial verschiebbar gelagert, das den äußeren Rand der Bremsscheibe und zwei zu beiden Seiten der Bremsscheibe angeordnete Bremsbeläge 14, 16 umgreift. Im Bremsgehäuse ist eine (hier nicht gezeigte) Betätigungseinrichtung angeordnet, mit der der innere Bremsbelag 14 direkt gegen die Bremsscheibe gedrückt werden kann, so daß das Bremsgehäuse 12 sich in entgegengesetzter Richtung verschiebt und dadurch auch den äußeren Bremsbelag 16 indirekt gegen die Bremsscheibe drückt.

Die Bremsbeläge 14, 16 weisen jeweils eine Rückenplatte 18 und ein daran befestigtes Reibelement 20 auf. Die Rückenplatten 18 der Bremsbeläge bilden Enden 22, 24 mit denen die Bremsbeläge in den Trägerarmen 8, 10 abgestützt und geführt sind. Die Bremsträgerarme 8, 10 bilden hierzu jeweils zwei im Winkel zueinander verlaufende Auflageflächen 26, 28 und Anlageflächen 30, 32.

An der Rückenplatte 18 des äußeren Bremsbelages 16 ist ein Halteelement 34 befestigt. Dieses Halteelement 34 besteht aus Blech und weist eine im wesentlichen U-förmige Gestalt auf. Die Basis 36 des U dient zur Befestigung des Halteelements an der Rückenplatte 18. Hierzu ist an der Rückenplatte ein Vorsprung 38 ausgebildet, der durch eine Öffnung des Halteelements 34 ragt und im befestigten Zustand an einen Nietkopf 42 bildet. Von der Basis 36 erstrecken sich zwei Schenkel 44, 46 im wesentlichen senkrecht zur Rückenplatte. An den Enden der Schenkel 44, 46 sind Haltearme 48, 50 ausgebildet. Diese Haltearme 48, 50 sind U-förmig umgebogen, so daß Halterungen für die Gehäusehaltefeder 52 gebildet werden.

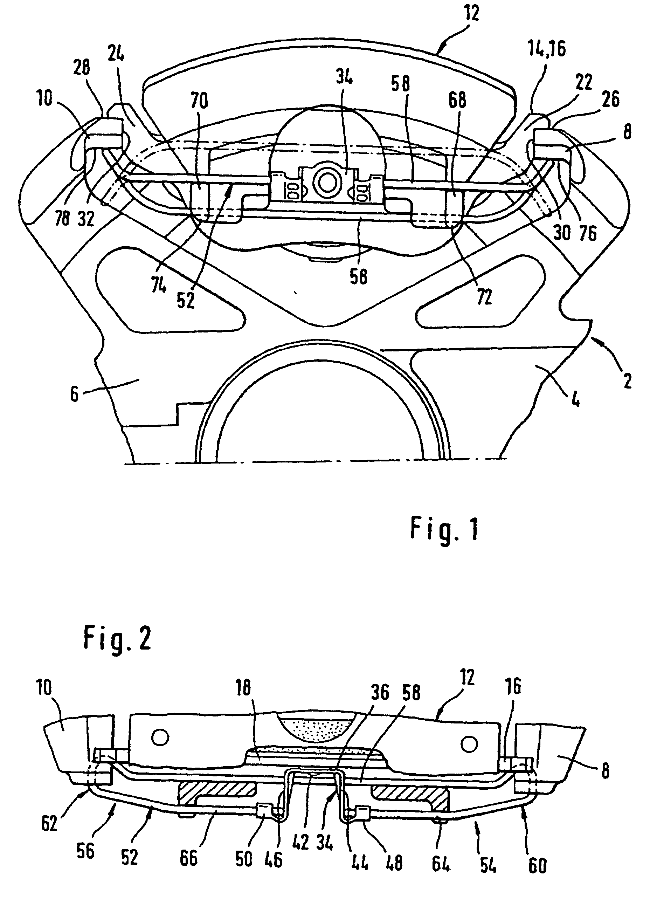

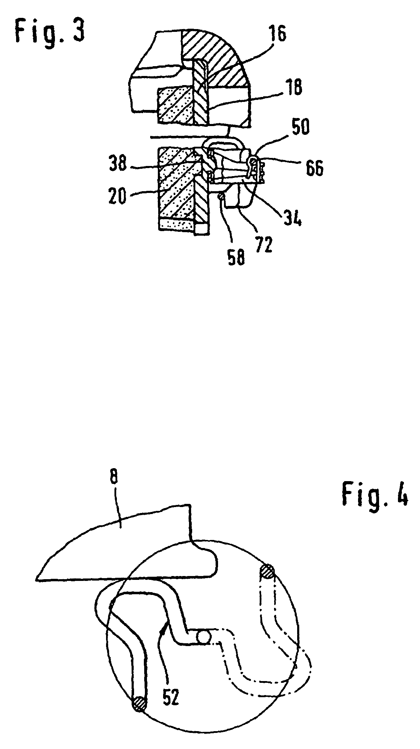

Die Gehäusehaltefeder 52 ist in einem Stück aus Draht gebogen und bildet zwei sich in tangentialer Richtung erstreckende Federarme 54, 56. Die Gehäusehaltefeder 52 weist hierzu ein Mittelstück 58 auf, das im Bereich des äußeren Schenkels des Bremsgehäuses im wesentlichen gerade ausgebildet ist und in dem darüber hinausragenden Bereich etwa in einem Winkel von 45 Grad zu den Bremsträgerarmen 8, 10 hin umgebogen ist. Unter den Bremsträgerarmen 8, 10 sind die Endstücke 60, 62 der Gehäusehaltefeder 52 ausgebildet, wozu die Feder ein kurzes Stück etwa parallel zu den Bremsträgerarmen 8, 10 verläuft um sodann in sich im wesentlichen tangential erstreckende freie Enden 64, 66 überzugehen. Die freien Enden 64, 66 werden von den Halterungen der Haltearme 48, 50 umgriffen, wie besonders in Fig. 3 deutlich zu sehen ist. Die Befestigung erfolgt hierbei so, daß die Gehäusehaltefeder 52 mit den freien Enden 64, 66 in die Haltearme 48, 50 einrastbar ist und nach dem Einrastvorgang schwenkbar gehalten ist. Im montierten Zustand, wie er besonders in den Figuren 1 und 2 zu sehen ist, biegen die freien Enden 64, 66 auf der Oberseite vom Bremsgehäuse 12 ausgebildeten Vorsprüngen 68, 70 auf, während das Mittelstück 58 der Gehäusehaltefeder unter von den Vorsprüngen 68, 70 gebildete Nasen 72, 74 greift. Die Endstücke 60, 62 der Gehäusehaltefeder liegen an Abstützflächen 76, 78 der Bremsträgerarme 8, 10 an.

Durch diese Befestigung wird die Gehäusehaltefeder 52 im vormontierten Zustand am Sattel gehalten und kann dabei auch den äußeren Belag in der vorgesehenen Positionen fixieren, so daß ein Transport des Bremsgehäuses ohne lose Teile möglich ist. Bei der Endmontage wird die Gehäusehaltefeder um ihre von den freien Enden 64, 66 gebildete Drehachse geschwenkt, so daß die Endstücke 16, 62 der Gehäusehaltefeder sich an den Abstützflächen 76, 78 der Bremsträgerarme 8, 10 abstützen. Die vormontierte Stellung der Gehäusehaltefeder 52 ist in den Figuren 1 und 4 gestrichelt dargestellt, während der Endmontagezustand in den ausgezogenen Linien dargestellt ist.

### Bezugszeichenliste

- 2: Bremsträger
- 4: Achsschenkel
- 6: Abschnitt
- 8: Bremsträgerarm
- 10: Bremsträgerarm
- 12: Bremsgehäuse
- 14: Bremsbelag
- 16: Bremsbelag
- 18: Rückenplatte
- 20: Reibelement
- 22: Ende
- 24: Ende
- 26: Auflagefläche
- 28: Auflagefläche
- 30: Anlagefläche
- 32: Anlagefläche
- 34: Halteelement
- 36: Basis
- 38: Vorsprung
- 40: Öffnung
- 42: Nietkopf
- 44: Schenkel
- 46: Schenkel
- 48: Haltearm
- 50: Haltearm
- 52: Gehäusehaltefeder
- 54: Federarm
- 56: Federarm
- 58: Mittelstück
- 60: Endstück
- 62: Endstück
- 64: Freies Ende
- 66: Freies Ende
- 68: Vorsprung
- 70: Vorsprung
- 72: Nase
- 74: Nase
- 76: Abstützfläche
- 78: Abstützfläche

## Patentansprüche

1. Teilbelag-Scheibenbremse für Kraftfahrzeuge, insbesondere integrierte Scheibenbremse, bei der ein Bremsträger (2) der Scheibenbremse in einen Achsschenkel (4) des Kraftfahrzeuges integriert ist, mit einem axial verschiebbaren Bremsgehäuse (12), das zu beiden Seiten einer Bremsscheibe angeordnete Bremsbeläge (14, 16) umgreift, und mit einer Haltefeder (52), die zumindest einen sich im wesentlichen in Umfangsrichtung erstreckenden Federarm (54, 56) aufweist, welcher das Bremsgehäuse (12) und den Bremsträger (2) miteinander verspannt, **dadurch gekennzeichnet, daß** die Haltefeder (52) freie Enden (64, 66) aufweist, mittels derer die Haltefeder (52) um eine von den freien Enden (64, 66) gebildete Drehachse schwenkbar an einem Halteelement (34) angebracht ist, welches an einem axial äußeren Bremsbelag (16) befestigt ist.

2. Teilbelag-Scheibenbremse nach Anspruch 1, **dadurch gekennzeichnet, daß** der Federarm (54, 56) mit einem Endstück (60, 62) an einem vom Bremsträger (2) gebildeten Bremsträgerarm (8, 10) anliegt.

3. Teilbelag-Scheibenbremse nach einem der vorhergehenden Ansprüche, **dadurch gekennzeichnet, daß** die Haltefeder (52) an vom Bremsgehäuse (12) gebildeten Vorsprüngen bzw. Nasen (68, 70, 72, 74) abgestützt ist.

4. Bremsbelag (16) für eine Teilbelag-Scheibenbremse nach Anspruch 1 mit einer Rückenplatte (18), die Enden (22, 24) zur Abstützung und Führung des Bremsbelages (16) am Bremsträger (2) bildet, und mit einem an der Rückenplatte (18) befestigten Reibelement (20), **dadurch gekennzeichnet, daß** an der Rückenplatte (18) ein Halteelement (34) mit Haltearmen (48, 50) befestigt ist, an denen eine Federarme (54, 56) umfassende Haltefeder (52) mit freien Enden (64, 66) einrastbar ist und nach dem Einrastvorgang um ihre von den freien Enden (64, 66) gebildete Drehachse schwenkbar am Halteelement (34) gehalten ist.

5. Bremsbelag (16) nach Anspruch 4, **dadurch gekennzeichnet, daß** das Halteelement (34) U-förmig gestaltet ist, mit einem Befestigungsabschnitt bzw. einer Basis (36), zur Befestigung des Halteelements (34) am Bremsbelag (16), und mit zwei Schenkeln (44, 46), an deren Enden die Haltearme (48, 50) ausgebildet sind.

## Claims

1. Spot-type disc brake for motor vehicles, in particular integrated disc brake, in which a brake carrier (2) of the disc brake is integrated into a steering knuckle (4) of the motor vehicle, including an axially displaceable brake housing (12) straddling brake linings (14, 16) arranged on either side of a brake disc, and a retaining spring (52) having at least one spring arm (54, 56) extending essentially in circumferential direction and clamping the brake housing (12) with the brake carrier (2), **characterized in that** the retaining spring (52) includes free ends (64, 66), by means of which the retaining spring (52) is fitted to a retaining element (34) in a manner swivelling about an axis of rotation formed by the free ends (64, 66), said retaining element (34) being attached to an axially outer brake lining (16).

2. Spot-type disc brake as claimed in claim 1,
**characterized in that** the spring arm (54, 56) with one end section (60, 62) abuts on a brake carrier arm (8, 10) formed by the brake carrier (2).

3. Spot-type disc brake as claimed in any one of the preceding claims,
**characterized in that** the retaining spring (52) abuts on projections or lugs (68, 70, 72, 74) formed by the brake housing (12).

4. Brake lining (16) for a spot-type disc brake as claimed in claim 1, including a back plate (18) that forms ends (22, 24) for supporting and guiding the brake lining (16) at the brake carrier (2), and with a friction element (20) attached to the back plate (18),
**characterized in that** a retaining element (34) is attached to the back plate (18) with retaining arms (48, 50), at which a retaining spring (52) comprising spring arms (54, 56) with free ends (64, 66) is lockable and, after the locking action, the retaining spring is retained at the retaining element (34) in a manner swivelling about its axis of rotation formed by the free ends (64, 66).

5. Brake lining (16) as claimed in claim 4,
**characterized in that** the retaining element (34) is U-shaped, having a fastening section or a basis (36) for fastening the retaining element (34) on the brake lining (16), and including two legs (44, 46) at the ends whereof the retaining arms (48, 50) are designed.

## Revendications

1. Frein à disque à garniture partielle pour véhicule automobile, en particulier frein à disque intégré, dans lequel un support de frein (2) du frein à disque est intégré à une branche d'essieu (4) du véhicule automobile, comportant un boîtier de frein (12) pouvant coulisser axialement, qui entoure des garnitures de frein (14, 16) disposées des deux côtés d'un disque de frein, et comportant un ressort de maintien (52) qui comporte au moins un bras de ressort (54, 56) s'étendant sensiblement dans la direction périphérique et qui serre entre eux le boîtier de frein (12) et le support de frein (2), **caractérisé en ce que** le ressort de maintien (52) présente des extrémités libres (64, 66) au moyen desquelles le ressort de maintien (52) est placé sur un élément de maintien (34), pouvant pivoter autour d'un axe de rotation formé par les extrémités libres (64, 66) et qui est fixé à une garniture de frein (16) axialement extérieure.

2. Frein à disque à garniture partielle selon la revendication 1, **caractérisé en ce que** le bras de ressort (54, 56) s'applique, par un embout (60, 62), contre un bras (8, 10) de support du frein formé par le support de frein (2).

3. Frein à disque à garniture partielle selon l'une des revendications précédentes, **caractérisé en ce que** le ressort de maintien (52) prend appui sur des saillies ou ergots (68, 70, 72, 74) formés par le boîtier de frein (12).

4. Garniture de frein (16) pour un frein à disque à garniture partielle selon la revendication 1, avec une plaque arrière (18) qui forme des extrémités (22, 24) pour soutenir et guider la garniture de frein (16) sur le support de frein (2), et avec un élément de friction (20) fixé à la plaque arrière (18), **caractérisée en ce que** sur la plaque arrière (18) est fixé un élément de maintien (34) avec des bras de maintien (48, 50) sur lesquels un ressort de maintien (52), comprenant des bras de ressort (54, 56), peut s'accrocher par ses extrémités libres (64, 66), et, après l'accrochage, est maintenu sur l'élément de maintien (34) de manière à pouvoir pivoter autour de son axe de rotation formé par les extrémités libres (64, 66).

5. Garniture de frein (16) selon la revendication 4, **caractérisée en ce que** l'élément de maintien (34) a la forme d'un U, avec une partie de fixation ou base (36), pour la fixation de l'élément de maintien (34) à la garniture de frein (16), et avec deux branches (44, 46) aux extrémités desquelles sont réalisés les bras de maintien (48, 50).
